# EUROPEAN PATENT APPLICATION

(11) **EP 1 179 687 A1**
(43) Date of publication of application: **13.02.2002**
(21) Application number: 01830371.9
(22) Date of filing: 07.06.2001
(51) Int. Cl.: F16D 69/02

(54) **Base matrix and composition of a braking friction material containing said base matrix and related preparation processes**

(30) Priority: 08.06.2000 IT PG000039; 04.06.2001 IT RM010310
(71) Applicant: Gioacchini, Rizziero, Perugia (IT); Monti, Ruggero, Perugia (IT); Carbone, Giuseppe, Salerno (IT)
(72) Inventor: Gioacchini, Rizziero, Perugia (IT); Monti, Ruggero, Perugia (IT); Carbone, Giuseppe, Salerno (IT)
(74) Representative: Tansini, Elio Fabrizio

(57) **Abstract**

The present invention relates to a base material containing an epoxy resin as well as a composition of a braking friction material comprising: a first component consisting of a base matrix; a second component consisting of chemical additives selected from the group made up of: rock wool, steel fibre, extra fine vermiculite, copper powder, bronze turnings, copper sulphide, amorphous graphite, calcium carbonate, zirconium, aluminium oxide, glassfibre, ventilated sulphur, friction powders, pyrites with sulphur addition, a mixture of synthetic graphite and coke; and a third component consisting of a stable epoxy resin. In addition, the present invention relates to a process for preparing the base matrix and obtaining said braking friction material.

## Description

The present invention relates to a base matrix and a composition of a braking friction material containing said base matrix.

In addition, the present invention relates to a process for preparing the base matrix and a process for preparing a braking friction material.

It is known that a braking friction material comprises a composition of a base material in combination with other elements, substances and products more commonly known as chemical additives.

The qualitative and quantitative selection of the chemical additives that can be employed in combination with the base matrix, enables various typologies of braking friction material to be obtained.

Due to the availability of various typologies of braking friction material, particular friction materials can be studied and set up, each of which is intended for a particular field of use depending on requirements and the needed performance.

Generally, three fields of use can be distinguished depending on the type of use and the type of vehicle:
- vehicles and machinery of the light/medium weight type;
- vehicles and machinery of the medium/heavy weight type;
- vehicles and machinery of the heavy type and extra heavy type and rail vehicles.

Belonging to vehicles and machinery of the light/medium weight type are motor vehicles and means of transport capable of generating high speeds, higher than other classes of vehicles. In this case employment of a very short space for stopping the vehicle is required. The friction coefficient becomes a priority parameter and it must have a value greater than 0.30. In addition, the material must be capable of quickly eliminating heat stored during braking. Cars, motorcycles and sidecars can be identified in this class.

Belonging to vehicles and machinery of the medium/heavy weight type are motor-vehicles and means of transport with a higher load as compared with light vehicles and for this reason they use a friction material having a greater resistance to heat. The braking space and stop time are higher. In addition, the temperature generated during braking is also greater than in the case of lighter vehicles. Industrial machinery, industrial vehicles, cranes and overhead travelling cranes can be identified in this class.

Belonging to vehicles and machinery of the heavy/extra heavy type and rail vehicles are motor-vehicles and means of transport having a much higher load than vehicles of the medium/heavy type and for this reason they use a friction material having a very high resistance to heat. The braking space and stop time are much higher and also the temperature generated during braking is much higher, as compared with vehicles of the medium/heavy type.

It is also known that in recent years some elements, substances and products that are usually utilised in processes for preparing base matrices and/or friction materials, have been recognized as substances detrimental to the public health and capable of causing serious diseases. For this reason use of some chemical additives in processes for preparing base materials and/or friction materials is prohibited and not allowed.

Among the substances recognized as polluting for the environment and detrimental to the public health, asbestos, lead, antimony and zinc are to be mentioned.

The technical problem underlying the present invention is to conceive a base matrix enabling achievement of a braking friction material which is capable of overcoming the limits and drawbacks of the known art.

This technical problem is solved by the Applicant that has found out a particular base matrix comprising an epoxy resin and a composition of a braking friction material containing said base matrix.

In addition, the Applicant has identified a technological process for preparation of the base matrix and preparation of the braking friction material containing said epoxy base matrix.

It is an aim of the present invention to devise a base matrix devoid of elements and components that are detrimental to the public health.

Another aim of the present invention is to devise a composition of a braking friction material that does not involve use of elements and substances such as asbestos, lead, antimony and zinc, so that it is not polluting for the environment and not detrimental to health.

A further aim of the present invention is to devise a composition of a braking friction material containing said base matrix having specific physical and chemical features for each application field.

It is a first object of the present invention to provide a base matrix having the features as recited in the appended main claim.

It is another object of the present invention to provide a composition of a braking friction material containing said base matrix having the features set forth in the accompanying main claim.

It is a further object of the present invention to provide a process for preparing a base matrix having the features set forth in the appended independent claim.

It is a still further object of the present invention to provide a process for preparing a braking friction material containing said base matrix having the features set forth in the appended independent claim.

Other preferred embodiments are described in the appended dependent claims.

Further technical features and the advantages of the invention will become more apparent in the following detailed description.

The braking friction material being the object of the present invention is conceived as a material comprising: a first component consisting of a base matrix and a second component consisting of at least one chemical additive.

Advantageously, the braking friction material further comprises a third component consisting of a resin.

The resin, referred to as the third component, can be of the same type as that employed in the base matrix or, alternatively, can be of a different type depending on the properties of the braking friction material.

The braking friction material comprises a base matrix mixed with a series of selected additives depending on the type of use.

Some studies conducted on braking friction materials proved that each individual additive employed in the material acquires new properties following dispersion of the same additives in the form of particles or fibres within a matrix.

For instance, materials such as titanium, carbon and aluminium reduced to particles or at all events to thin fibres increase their resistance quality, and therefore their friction property.

The material rigidity and strength depend on the added reinforcing element (additive) taking however into consideration the fact that it is the base matrix that provides the greatest contribution to the friction property. In addition, it is still the base matrix that affects heat conductivity to an important degree.

The mechanical performance of the braking material depends on the synergy between the fibres therein present and the base matrix.

It is the base matrix typology that dictates selection of the additives to be employed in the braking material. The factor establishing selection of the additives is mainly the temperature at which the braking material has to be employed.

A braking material must have a well-determined structure in order to show precise features such as: resistance to temperature, mechanical rigidity; resistance to corrosion and heat dispersion.

In a braking material exposed to temperatures included between 100 and 200°C the base matrix comprises an epoxy resin or an amino resin.

In a braking material exposed to temperatures beyond 200°C the base matrix comprises polymers in the form of thermosetting resins.

A braking material comprising a metal matrix has a resistance past 300°C and a greater mechanical strength.

The base matrix, referred to as the first component, comprises a stable epoxy resin.

Preferably, the stable epoxy resin is of the type selected from the FERS 1506-FERS 1109 resins.

Epoxy resins, as compared with other types of resin such as phenolic resins, are preferred because they have a greater binding force and more resistance to high temperatures. These features ensure a stronger and more constant braking, quite completely eliminating the "fade" phenomenon. In addition, they are subjected to a lower extent to sudden changes of weather and generally to the external weather conditions, thereby ensuring a constant quality during working and during use fatigue.

Advantageously, the employed resins are in the form of powder and they preferably polymerize at temperatures of 150 to 160°C. Preferably, they are thermosetting resins.

Furthermore, the base matrix, in addition to the stable epoxy resin, also comprises at least one of the following compounds selected from the group consisting of: silver graphite, boron nitride, talc, amorphous rubber of the nitrile type, silicon carbide and mica.

Advantageously, the base matrix comprises, in addition to the stable epoxy resin, the following compounds: silver graphite, boron nitride, talc, amorphous rubber of the nitrile type and mica.

Preferably, the epoxy resin and said compounds are present in the base matrix (relative to the weight of the base matrix) in the above stated concentrations: stable epoxy resins in a concentration included between 10% and 30% by weight; silver graphite in a concentration included between 10% and 25% by weight; boron nitride in a concentration included between 3% and 14% by weight; talc in a concentration ranging from 1% to 13% by weight; amorphous rubber of the nitrile type in a concentration ranging from 1% to 14% by weight; silicon carbide in a concentration included between 5% and 20% by weight and mica in a concentration included between 1% and 14% by weight.

The base matrix is present in the composition of the braking friction material in a concentration preferably included between 15% and 30% by weight, relative to the weight of the braking friction material; more preferably between 15% and 25% by weight.

The chemical additive, referred to as second component, is present in the braking friction material in a concentration by weight as pointed out in the following, referred to the total amount of the composition of braking friction material.

The chemical additive or second component is selected from the group consisting of: rock wool 10% to 25%; steel fibre 10% to 25%; extra fine vermiculite 0.5% to 3%; copper powder 1% to 5%; bronze turnings 1% to 5%; copper sulfide 1% to 5%; amorphous graphite 0.5% to 5%; calcium carbonate 0.5% to 7%; zirconium 0.5% to 3%; aluminium oxide 1% to 8%; glass fibre 0% to 2%; ventilated sulphur 0.5% to 3%; a mixture of pyrites and sulphur called "Ultimate" 1% to 6%; a mixture of synthetic graphite and coke 1% to 6%; friction powders (quartz powder) 5% to 35% (by weight relative to the overall weight of the epoxy resins).

In a preferred embodiment being the object of the present invention, additives are: rock wool 10% to 25%; steel fibre 10% to 25%; copper powder 1% to 5%, preferably 2% to 4%; bronze turnings 1% to 5%, preferably 2% to 4%; amorphous graphite 0.5% to 5%, preferably 1% to 4%; aluminium oxide 1% to 8%, preferably 2% to 6%; a mixture of pyrites and sulphur called "Ultimate" 1% to 6%, preferably 2% to 4%; a mixture of synthetic graphite and coke 1% to 6%, preferably 2% to 4%; friction powders (quartz powder) 5% to 35%, preferably 10% to 30% (by weight relative to the overall weight of the epoxy resins).

The resin, referred to as third component, is a stable epoxy resin.

Preferably, said epoxy resin is selected from the above listed resins.

Advantageously, the epoxy resin is present in a concentration included between 20% and 25% by weight, relative to the weight of the final composition of the braking friction material.

The particular selection of the base matrix in association with the chemical additives, carefully selected by the Applicant, has enabled accomplishment of a composition of braking friction material having unexpected physical and mechanical properties.

The base matrix is selected from the base matrices containing a stable epoxy resin and other components, as above pointed out.

Advantageously, the epoxy base matrix comprises graphite and silicon carbide as temperature stabilizers. In addition, graphite and silicon carbide establish the friction coefficient against temperature and speed. Silicon carbide enables consumption and wear of the braking friction material to be limited during the braking procedure.

Boron nitride is a good heat conductor and is used in the base matrix because it helps in hardening and electrically insulating the braking friction material.

The amorphous rubber of the nitrile type not only increases toughness and plasticity of the friction material but it perfectly completes the effect of eliminating high acoustic frequencies proper of graphite.

The friction powder, better identified as quartz powder, present in the base matrix, ensures a better distribution of the braking properties in the composition of friction material and helps in restoring the friction coefficient in due time.

Talc acts as a lubricant at high temperatures and ensures a more homogeneous braking.

Mica is a component having an excellent resistance to heat and helps in stabilizing the friction coefficient, and in addition it resists corrosion.

Talc and mica are essential and necessary components for mixing.

This typology of base matrix has a high thermal resistance to temperatures higher than 300°C.

The thermal resistance usually reached in normal operation is 300-310°C.

Tests carried out on materials being the object of the present invention give excellent results of thermal resistance until 600°C.

In addition, this base matrix submitted to a continuous and prolonged braking friction force shows a constant and uniform behaviour until temperatures of 600°C.

The presence of particular additives in given weight ratios, in association with the epoxy base matrix, enables compositions of braking friction material to be prepared for each type of use.

The compositions of braking friction material being the object of the present invention keep their features of resistance and rigidity independently of any type of stress and/or effort to which they are submitted.

In addition, the compositions of braking friction material do not contain either components detrimental to the human health or environmental pollutants and are able to solve problems connected with temperature increase, such as reduction in the value of the friction coefficient and non-restoration of the original value of same in due time ("fade").

Practically, the braking friction material offers a minimum variation in the friction coefficient against temperature so as to ensure a continuous and prolonged use of same.

In addition, the material ensures an unvariable structure, within wide temperature ranges, according to the limitations defined by applications of same from working temperatures until 300/310°C. The thermal resistance usually achieved in operation is 300-310°C but from technical tests carried out on the braking materials being the object of the present invention it appears an excellent resistance until 600°C.

Components such as titanium, carbon, aluminium in the form of particles or at all events in thin fibres help in increasing the features of strength and therefore of friction in the braking friction material.

The rigidity and strength of the braking friction material depend on the added reinforcing element. However, it is important to select a base matrix capable of giving the friction material the maximum contribution to the friction property.

Furthermore, the base matrix affects the property of heat conductivity in a decisive manner in the braking friction material.

On the other hand, the mechanical performance of the braking friction material is given by the synergy between the added components and the epoxy base matrix.

The decisive factor affecting selection of the epoxy base matrix, the epoxy matrix amount in the composition of the friction material, the chemical additives, the amounts of the chemical additives in the composition of the friction material and their ratios, is represented by the temperature range within which the composition of the braking friction material is planned for working.

A composition of braking friction material must have the following features:

### a) Resistance to temperature.

The friction materials available on the market have an operation temperature of about 300°C at most. The particular association of the epoxy base matrix with the chemical additives in the stated proportions accomplished by the Applicant enables a friction material capable of reaching 600°C to be obtained.

### b) Mechanical rigidity.

The friction materials available on the market have a coefficient of 0.37. The particular association of the epoxy base matrix with the chemical additives in the stated proportions accomplished by the Applicant enables a friction material capable of reaching a coefficient value as high as 0.51 depending on the destination of use to be obtained.

### c) Resistance to corrosion.

The friction materials available on the market have a coefficient value of 0.30 (to a temperature as high as 300°C at most). The particular association of the epoxy base matrix with the chemical additives in the stated proportions, accomplished by the Applicant, enables a friction material capable of reaching an average coefficient value of 0.30 to 0.50 (with a temperature of 600°C) to be obtained.

### d) Heat dispersion.

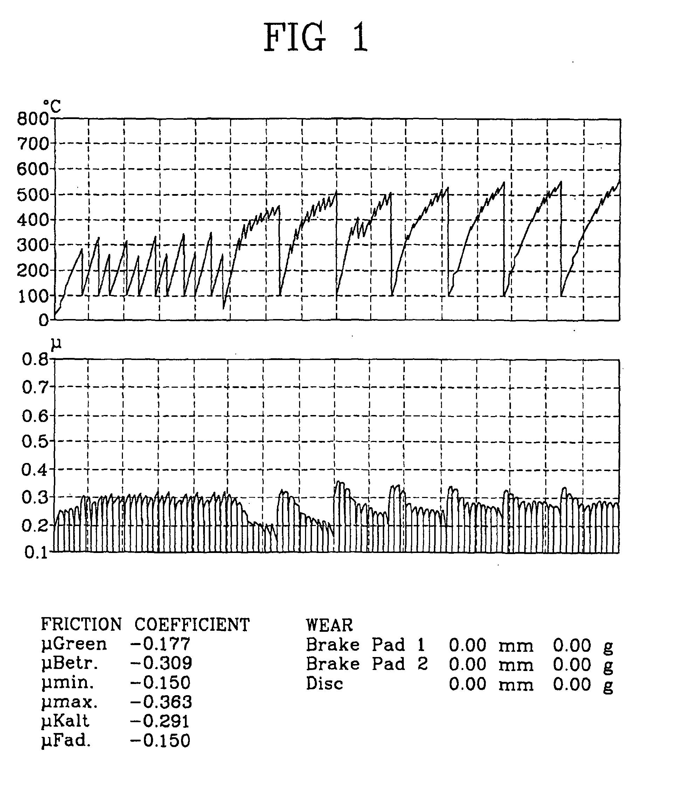

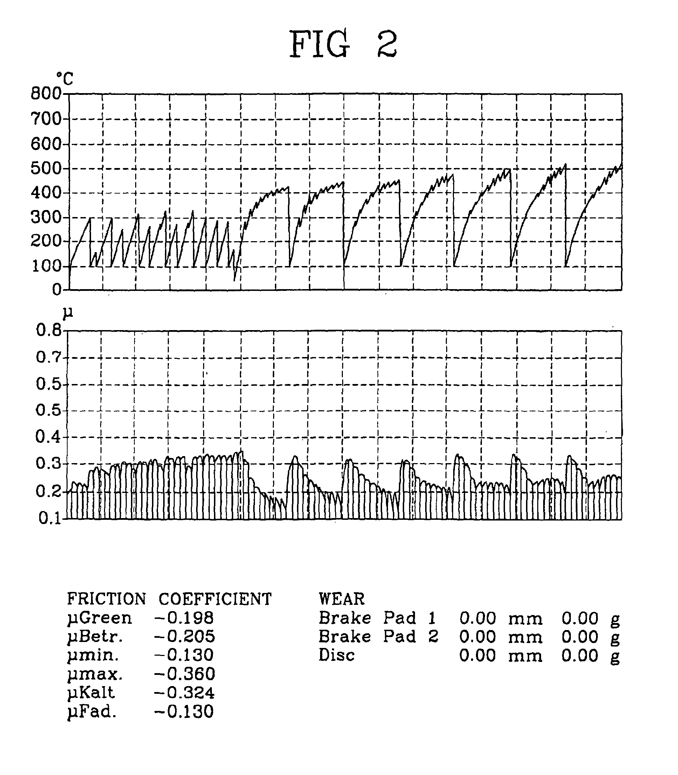

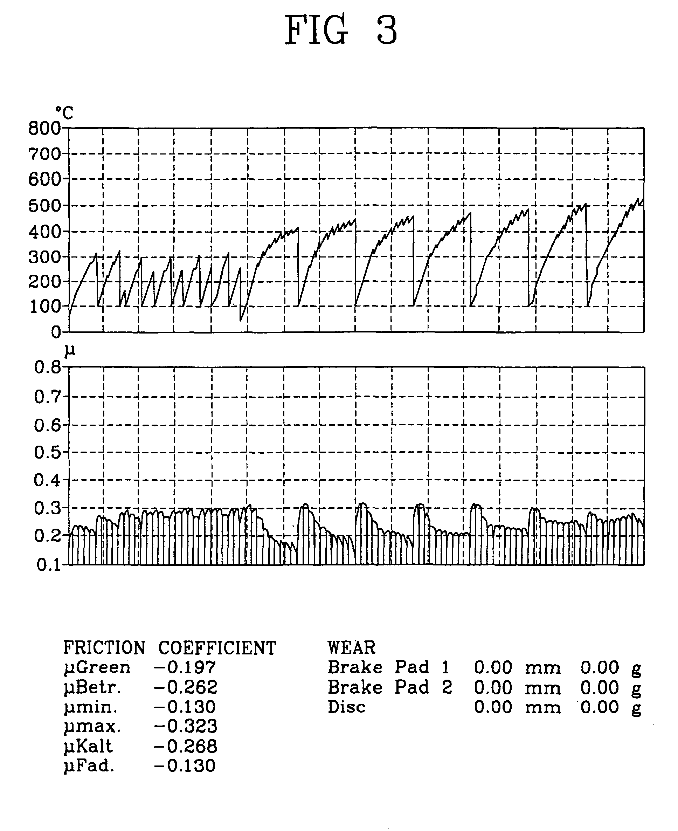

Values related to restoration of the optimal operation temperature are reproduced in Fig. 1, Fig. 2 and Fig. 3.
Fig. 1 was based on the testing conditions No. 1 with a material M1 being the object of the present invention, on a Krauss test bed.
Fig. 2 was based on the testing conditions No. 2 with a material M2 ≠ M1, being the object of the present invention, on a Krauss test bed.
Fig. 3 was based on the testing conditions No. 3 with a material M3 ≠ M2 ≠ M1 being the object of the present invention, on a Krauss test bed.

| **TECHNICAL DATA** | **TEST 1** **M1** | **TEST 2** **M2** | **TEST 3** **M3** |
|---|---|---|---|
| Brake caliper | floating | floating | floating |
| Disc diameter (mm) | 240 | 240 | 240 |
| Thickness (mm) | 11 | 11 | 11 |
| Mean friction radius (mm) | 100.2 | 100.2 | 100.2 |
| Surface area cm² | 31.4 | 31.4 | 31.4 |
| Pressure (bar) | 22.9 | 22.9 | 22.9 |
| Starting thickness (mm) | 16.6 | 16.6 | 16.6 |
| Final thickness | 16.4 | 16.5 | 16.4 |
| HDB hardness | 90 | 50 | 50 |

The process for preparing a braking friction material being the object of the present invention involves a sequence of steps.

The first step is that of arranging a proportional amount of rock wool in a container. Preferably, the container is a mixer. The rock wool is a long-fibre component and for this reason it is required to be mixed separately of the base matrix to enable the fibres to completely open. This process step can occupy a period of time included between 5 and 20 minutes.

Subsequently, the steel fibre is added. The steel fibre is mixed over a period of time included between 2 and 10 minutes in such a manner that the fibres are allowed to completely open thereby promoting homogeneity of the final product.

Preferably, the temperature in the mixer container is included between 10 and 40°C thereby promoting mixing between the components.

During this step an amount of epoxy resins preferably included between 10% and 30% by weight, more preferably between 20% and 25% by weight, with respect to the overall weight of the friction material, is added.

Preferably, the epoxy resins are of the FERS 1506-FERS 1109 type. Subsequently, there is a step of adding some of the following additives selected from the group consisting of: extra fine vermiculite, copper powder, bronze turnings, copper sulfide, amorphous graphite, calcium carbonate, zirconium, aluminium oxide, glassfibre, ventilated sulphur, a mixture of pyrites and sulphur called "Ultimate", a mixture of synthetic graphite, and friction powders (quartz powder).

The material after addition of the components is worked over a period of time included between 2 and 10 minutes.

The material during this step is mostly made up of powders and does not require a long permanence within the work machine.

A base matrix comprising the epoxy resin is added to the mixture obtained through the above listed steps. Mixing takes place over a period of time included between 10 and 20 minutes for an amount of raw materials included between 150 and 250 kg.

Preferably, the base matrix has a granular physical state.

Advantageously, the base matrix comprising the epoxy resin is obtained by a process involving two stages.

In the first stage, a portion of silicon carbide, boron nitride and silver graphite are impregnated with a proportional amount of stable epoxy resins.

The obtained mixture is mixed over a varying period of time depending on the destination of the base matrix.

Subsequently, a portion of rubber of the nitrile type, a proportional amount of stable epoxy resins, a portion of talc and a portion of mica are added to the mixture obtained through the first phase. The mixture obtained until this time is then mixed over a varying period of time depending on the destination of the matrix. At the end of mixing, the base matrix is obtained.

The obtained base matrix is in the form of a powder and is conveyed to a storage tank.

The components of the base material such as epoxy resin, boron nitride, silver graphite, rubber of the nitrile type, talc and mica have been selected and are present in the base material in percentages sufficient to ensure an excellent mixing with the silicon carbide that can possibly be present.

By way of example only, preparation of the base matrix can be diagrammatically reproduced as follows (percentages refer to the overall weight of the base matrix):

### First stage:

- Epoxy resin 5% to 18%; preferably 10% to 12.5%;
- Silicon carbide 5% to 20%; preferably 8% to 15%;
- Boron nitride 3% to 14%; preferably 5% to 10%;
- Silver graphite 10% to 25%; preferably 15% to 20%; and

### Second stage:

- Epoxy resins 5% to 16%; preferably 10% to 12.5%;
- Rubber of the nitrile type 1% to 14%; preferably 3% to 10%;
- Talc 1% to 13%; preferably 3% to 10%;
- Mica 1% to 14%; preferably 3% to 10%.

The steps involved in mixing the additives with the base matrix for obtaining the friction material being the object of the present invention are reproduced hereinafter, by way of example only (percentages refer to the overall weight of the friction material):
- First step: rock wool 10% to 25%, preferably 15% to 20%;
- Second step: steel fibre 10% to 25%, preferably 15% to 20%;
- Third step: epoxy resins 15% to 30%, preferably 20% to 25%;
- Fourth step: extra fine vermiculite 0.5% to 3%, preferably 1% to 2%; copper powder 1% to 5%, preferably 2% to 4%; bronze turnings 1% to 5%, preferably 2% to 4%; copper sulfide 1% to 5%, preferably 2% to 4%; amorphous graphite 0.5% to 5%, preferably 1% to 4%; calcium carbonate 0.5% to 7%, preferably 1% to 5%; zirconium 0.5% to 3%, preferably 1% to 2%; aluminium oxide 1% to 8%, preferably 2% to 6%; glassfibre 0% to 2%, preferably 0% to 1%; ventilated sulphur 0.5% to 3%, preferably 1% to 2%; a mixture of pyrites and sulphur called "Ultimate" 1% to 6%, preferably 2% to 4%; a mixture of synthetic graphite and coke 1% to 6%, preferably 2% to 4%; friction powders (quartz powder) 5% to 35%, preferably 10% to 30% (by weight relative to the overall weight of epoxy resins); and
- Fifth step: adding of the previously prepared base matrix.

In a preferred embodiment being the object of the present invention, components employed in the fourth step are selected from: copper powder 1% to 5%, preferably 2% to 4%; bronze turnings 1% to 5%, preferably 2% to 4%; amorphous graphite 0.5% to 5%, preferably 1% to 4%; aluminium oxide 1% to 8%, preferably 2% to 6%; a mixture of pyrites and sulphur called "Ultimate" 1% to 6%, preferably 2% to 4%; a mixture of synthetic graphite and coke 1% to 6%, preferably 2% to 4%; friction powders (quartz powder) 5% to 35%, preferably 10% to 30% (by weight relative to the overall weight of epoxy resins).

The braking friction materials being the object of the present invention do not contain antimony and molybdenum because they are detrimental to health.

Antimony was replaced with a product called "Ultimate", produced by the company ITAPROCHIM (Italy) which is a combination of pyrites added with sulphur.

Molybdenum was replaced by a mixture of synthetic graphite and coke in appropriate percentages, depending on the final use destination of the friction material.

## Claims

1. A base matrix for a braking friction material, said matrix comprising a resin **characterized in that** said resin is an epoxy resin.

2. A matrix as claimed in claim 1, wherein said base matrix comprises, in addition to the epoxy resin, at least one compound selected from the group consisting of: silver graphite, boron nitride, amorphous rubber of the nitrile type, talc and mica.

3. A matrix as claimed in claim 2, wherein said base matrix comprises the silicon carbide compound in addition thereto.

4. A matrix as claimed in claim 3, wherein said epoxy resin and compounds are present in the base matrix, in the following concentrations by weight relative to the weight of the base matrix: epoxy resin 10% to 30%; silver graphite 10% to 25%; boron nitride 3% to 14%; amorphous rubber of the nitrile type 1% to 14%; talc 1% to 13%; mica 1% to 14% and silicon carbide 5% to 20%.

5. A composition of a braking friction material **characterized in that** it comprises a first component consisting of a base matrix as claimed in claims 1 to 4; and a second component consisting of at least one chemical additive selected from the group consisting of: rock wool, steel fibre, copper powder, bronze turnings, amorphous graphite, aluminium oxide, a mixture of pyrites and sulphur, a mixture of synthetic graphite and coke and friction powders.

6. A composition as claimed in claim 5, wherein said braking friction material in addition comprises at least one chemical additive selected from the group consisting of: extra fine vermiculite, copper sulfide, calcium carbonate, zirconium, glassfibre and sulphur.

7. A composition as claimed in claim 5, wherein said braking friction material in addition to the base matrix and the additives comprises a third component consisting of an epoxy resin.

8. A composition as claimed in claim 5, in which the base matrix is present in an amount included between 15% and 30% by weight, relative to the composition of the braking friction material.

9. A composition as claimed in claim 6, wherein the chemical additives are present in a concentration expressed by weight as hereinafter reproduced, referred to the total amount of the composition of braking friction material:
- rock wool 10 to 20%;
- steel fibre 10 to 25%;
- extra fine vermiculite 0.5 to 3%;
- copper powder 1 to 5%;
- bronze turnings 1 to 5%;
- copper sulfide 1 to 5%;
- amorphous graphite 0.5 to 5%;
- calcium carbonate 0.5 to 7%;
- zirconium 0.5 to 3%;
- aluminium oxide 1 to 8%;
- glassfibre 0 to 2%;
- ventilated sulphur 0.5 to 3%;
- friction powders 5 to 35% relative to the overall weight of the epoxy resin alone;
- pyrites added with sulphur 1 to 6% and
- a graphite and coke mixture 1 to 6%.

10. A process for preparing a base matrix according to claim 1, **characterized in that** it comprises the following steps:
- arranging the following components: silicon carbide, boron nitride, silver graphite, in a container;
- amalgamating the components with a first portion of epoxy resin to form a mixture;
- adding one portion of amorphous nitrile rubber, a second portion of epoxy resin, one portion of talc and one portion of mica to the obtained mixture;
- carrying out mixing until a base matrix is obtained.

11. A process for preparing a braking friction material as claimed in claim 5, **characterized in that** it comprises the following steps;
- arranging one portion of rock wool in a container;
- adding one portion of steel fibre and carrying out mixing;
- adding one portion of epoxy resin to the previously obtained mixture;
- introducing and mixing the chemical additives selected from the group consisting of: rock wool, steel fibre, copper powder, bronze turnings, amorphous graphite, aluminium oxide, mixture of pyrites with sulfur addition, mixture of graphite and coke and friction powders;
- amalgamating the mixture obtained from the preceding steps with one portion of base matrix comprising the epoxy resin prepared according to claim 10 to obtain a braking friction material.
